# EUROPEAN PATENT APPLICATION

(11) **EP 4 273 297 A1**
(43) Date of publication of application: **08.11.2023**
(21) Application number: 22172132.7
(22) Date of filing: 06.05.2022
(51) Int. Cl.: C23G 1/08, C23G 1/36, C23G 3/02

(54) **METHOD OF TREATING A PICKLING SOLUTION FOR A PICKLING PROCESS**

(71) Applicant: John Cockerill UVK GmbH, 56410 Montabaur (DE)
(72) Inventor: ZOELLNER, Andreas, 40878 Ratingen (DE)
(74) Representative: Schwöbel, Thilo K.

(57) **Abstract**

The present invention relates to method of treating a pickling solution for a pickling process, wherein the pickling solution comprises silicon or silicon compounds dispersed in the pickling solution or dissolved in the pickling solution, wherein the pickling solution comprises an inorganic acid compound and wherein the pickling solution, in order to conduct the pickling process, is circulated in at least one pickling tank, wherein a part of the circulated pickling solution is removed from the circulation and wherein fresh or regenerated pickling solution is added to the circulated pickling solution, wherein the method comprises the following steps:
-- in a first step, the removed part of the pickling solution is provided to a storage cavity,
-- in a second step, at least part of the pickling solution processed in the first step is subjected to a regeneration treatment in order to obtain regenerated pickling solution, wherein the regeneration treatment involves or comprises
-- at least one microfiltration step and/or
-- at least one diffusion dialysis step such that dissolved silicon compounds and/or precipitates formed by the silicon compounds are removed, at least partly, from the regenerated pickling solution.

## Description

### BACKGROUND

The present invention relates to a method of treating a pickling solution for a pickling process.

In pickling processes, metal surfaces are treated by removing impurities such as stains, rust or scale using pickle liquors containing strong acids. These impurities may occur during metal forming processes, in particular rolling and/or heat treatment. To this end, strong acids, also called pickle liquor, are used to descale or clean the metal surfaces. For example hydrochloric acid, sulfuric acid, nitric acid, hydrofluoric acid or mixtures of different acids may be used as pickling agents for pickling of e.g. ferrous metals, copper or aluminium alloys. The large amounts of spent acids are not only hazardous to the environment but usually also expensive. Thus, it is desirable to reduce the amount of generated spent acid or even to regenerate the spent acids for reuse in various processes. However, the known pickling apparatuses have a relatively short mean time between failures, which is due to large amounts of contaminates of hazardous compounds or elements, which form deposits within devices and/or pipes of the pickling apparatus. This build up of deposits is especially very exhaustive when silicon steel or electric steel is pickled. Especially, the precipitation of silica in pipes, tanks, heat exchangers etc., due to its low solubility in acidic fluids, forces the operators to shut down the plant and to clean it manually.

### SUMMARY

It is therefore an object of the present invention to provide an apparatus which improves the operation of a pickling line for pickling of silicon steel material in a pickling solution. A further object of the present invention is to provide a method of treating the pickling solution and a device for treating the pickling solution, wherein the operation time and the lifetime of the pickling apparatus are increased and the maintenance costs are reduced.

The object of the present invention is achieved by a method of treating a pickling solution for a pickling process, wherein the pickling solution comprises silicon or silicon compounds dispersed in the pickling solution or dissolved in the pickling solution, wherein the pickling solution comprises an inorganic acid compound and wherein the pickling solution, in order to conduct the pickling process, is circulated in at least one pickling tank, wherein a part of the circulated pickling solution is removed from the circulation and wherein fresh or regenerated pickling solution is added to the circulated pickling solution,
wherein the method comprises the following steps:
   -- in a first step, the removed part of the pickling solution is provided to a storage cavity,
   -- in a second step, at least part of the pickling solution processed in the first step is subjected to a regeneration treatment in order to obtain regenerated pickling solution,
wherein the regeneration treatment involves or comprises
   -- at least one microfiltration step and/or
   -- at least one diffusion dialysis step
such that dissolved silicon compounds and/or precipitates formed by the silicon compounds are removed, at least partly, from the regenerated pickling solution.

According to the present invention, it is thereby advantageously possible to increase the lifetime of the pickling apparatus and reduce maintenance costs. Preferably, the silicon compounds are contained in a hydrochloric or sulfuric bath used for pickling a silicon steel material, such as work pieces, sheets or steel strips. Preferably, the used bath is recycled after concentration and subject to different pickling steps and/or regeneration steps in associated pickling and/or regeneration equipments of the pickling apparatus. For example, the pickling apparatus comprises one or more pickling and/or regeneration equipments, wherein a pickling and/or regeneration equipment of the one or more pickling and/or regeneration equipments is a pickling bath device, an acid regeneration device, a rinsing device, a mixing device, a concentrator device and/or a piping. Preferably the pickling and/or regeneration equipments are configured to transport the silicon steel material and/or to convey and/or store the pickling solution. Preferably, the precipitates (especially those formed by the silicon compounds) are deposits, e.g. on a wall of container means, such as a conveyance device, e.g. a tube or pipe of the piping, and/or a storing device such as a tank or other means having a cavity.

According to the present invention, the pickling solution comprises silicon or silicon compounds dispersed in the pickling solution or dissolved in the pickling solution, and the pickling solution comprises an inorganic acid compound. In order to conduct the pickling process, the pickling solution is circulated in at least one pickling tank, wherein a part of the circulated pickling solution is removed from the circulation and fresh or regenerated pickling solution being added to the circulated pickling solution. According to the present invention, in the first step, the removed part of the pickling solution (i.e. the part of the pickling solution which is removed from the circulation of the pickling solution) is provided to a storage cavity, also called sedimentation cavity. In the second step, at least part of the pickling solution processed in the first step (i.e. subjected to the sedimentation) is subjected to a regeneration treatment in order to obtain regenerated pickling solution. According to the present invention, the regeneration treatment involves or comprises at least one microfiltration step and/or at least one diffusion dialysis step, especially at least one microfiltration step or at least one microfiltration step and at least one diffusion dialysis step. The microfiltration and/or the diffusion dialysis removes (from the pickling solution subjected to the regeneration treatment) dissolved silicon compounds and/or precipitates formed by the silicon compounds, at least partly, such that those (removed dissolved silicon compounds and/or removed precipitates formed by the silicon compounds) are no longer part of the regenerated pickling solution. According to the present invention, it is advantageously possible to recover the acid while the majority of positive charged ions are rejected.

Especially, the microfiltration step involves a special grade microfiltration membrane to remove the undissolved solids, wherein, in the diffusion dialysis step, the permeate of the filtration is processed in a spiral wound diffusion dialysis module.

According to the present invention, the lifetime of the pickling and/or regeneration equipments for executing a pickling and/or regeneration processes as well as the lifetime of storing and/or conveyance devices are increased by the regeneration treatment of the pickling solution. For example, the precipitates may be polymerized silicon compounds or silicates or other deposits comprising silicon compounds. Typically, the precipitates deposit within the pickling and/or regeneration equipments of the pickling apparatus. Moreover the precipitates or deposits are composed of rather rigid material, which are either irremovably fixed to the pickling and/or regeneration equipments or can be removed only at considerable expenses and maintenance costs. According to the present invention, the formation of such precipitates can be advantageously avoided and/or the precipitates are removed by means of the regeneration treatment of the inventive method. Furthermore, it is advantageously possible to reduce the costs of production for high strength and/or high-grade steel, in particular for the automotive industry, wherein the high-strength and/or high-grade steel comprises approximately between 0,3% and 0,8 % Silicon (Si) as an alloy component.

Preferably according to the present invention, the inorganic acid compound comprises or consists of hydrochloric acid, or of sulfuric acid, or of a combination of both. It is furthermore preferred according to the present invention that the pickling process is performed for pickling of a silicon steel material, especially a silicon steel or a high strength steel or electric steel, especially a steel material comprising between 0,1 wt-% to 4,0 wt-% of silicon, especially between 0,2 and 0,3 wt-% of silicon or between 1,6 and 3,1 wt-% of silicon.

According to another preferred embodiment of the present invention, the regeneration treatment comprises the at least one microfiltration step in a manner such that:
-- a microfiltration membrane is used, especially a tubular microfiltration membrane, and especially made from polyethylene and/or having an inner tube diameter of between 2 mm and 20 mm, preferably between 4 mm and 8 mm, and/or
-- the microfiltration is conducted by means of a by-pass microfiltration unit, and/or
-- the microfiltration is conducted using by means of repeated flush-back operations, especially periodic flush-back operations, especially conducted by means of blasting air and/or an acid through the microfiltration membrane, and/or
-- the microfiltration yields, besides a concentrate solution, a permeate solution, wherein the permeate solution corresponds to the regenerated pickling solution.

According to the present invention, it is thereby advantageously possible to reduce the amount of silicon compounds such as to inhibit or suppress the formation of said precipitates (i.e. incrustations) of (polymerized) silicon compounds within devices and/or pipes of the pickling apparatus. The formation of said precipitates on relatively hot surfaces (e.g. within heat-exchangers) and/or within pipes of the pickling apparatus is preferably inhibited. Thereby the lifetime of the pickling apparatus is increased and the maintenance costs are reduced.

According to another preferred embodiment of the present invention, the regeneration treatment comprises the at least one diffusion dialysis step in a manner such that:
-- an anion exchange membrane is used, wherein the pickling solution to be regenerated is fed on one side of the anion exchange membrane while deionized water is fed on the other side of the anion exchange membrane in opposite direction, wherein especially the anion exchange membrane is spirally arranged, and/or
-- the diffusion dialysis is a concentration driven process such that the free acid of the pickling solution is transported through the anion exchange membrane, and especially metals, preferably silicon, are rejected and/or
-- the diffusion dialysis yields, besides a dialysate solution, a diffusate solution, wherein the diffusate solution corresponds to the regenerated pickling solution.

According to the present invention, it is thereby advantageously possible to reduce the amount of silicon compounds such as to inhibit or suppress the formation of said precipitates (i.e. incrustations) of (polymerized) silicon compounds within devices and/or pipes of the pickling apparatus. The formation of said precipitates on relatively hot surfaces (e.g. within heat-exchangers) and/or within pipes of the pickling apparatus is preferably inhibited. Thereby the lifetime of the pickling apparatus is increased and the maintenance costs are reduced.

According to a further preferred embodiment of the present invention, the regeneration treatment comprises both the at least one microfiltration step and the at least one diffusion dialysis step in a manner such that
-- at least part of the pickling solution processed in the first step is subjected to the at least one microfiltration step yielding, besides a concentrate solution, a permeate solution,
-- wherein the permeate solution is subjected to the at least one diffusion dialysis step yielding, besides a dialysate solution, a diffusate solution, wherein the diffusate solution corresponds to the regenerated pickling solution.

According to the present invention, it is thereby advantageously possible to even more reduce the amount of silicon compounds such as to inhibit or suppress the formation of said precipitates (i.e. incrustations) of (polymerized) silicon compounds within devices and/or pipes of the pickling apparatus. The formation of said precipitates on relatively hot surfaces (e.g. within heat-exchangers) and/or within pipes of the pickling apparatus is preferably inhibited. Thereby the lifetime of the pickling apparatus is increased and the maintenance costs are reduced.

According to another preferred embodiment of the present invention, the regeneration treatment results in a retention, from the regenerated pickling solution, of at least the following amounts of iron and of silicon as contained in the part of the pickling solution subjected to the regeneration treatment:
-- at least 60%, preferably at least 80%, still preferably at least 90%, and even more preferably at least 95%, more preferably at least 99%,
especially:
-- in case of using hydrochloric acid as inorganic acid compound, at least 60%, preferably at least 70%, still preferably at least 75%,
-- in case of using sulfuric acid as inorganic acid compound, at least 80%, preferably at least 90%, still preferably at least 95%, and even more preferably at least 99%.

According to another preferred embodiment of the present invention, the regeneration treatment comprises, especially as part of the second step, measuring of at least the silicon content or the content of silicon compounds in the regenerated pickling solution,
wherein the regeneration treatment is performed in dependency of the measured silicon content or the measured content of silicon compounds, especially such that, in view of performing the pickling process of a predetermined kind of steel, the regenerated pickling solution comprises a predetermined amount or content of silicon or of silicon compounds before being added to the circulated pickling solution, especially such as to ensure that silicon or silicon compounds remain dissolved in the pickling solution while performing the pickling process,
wherein especially the at least one microfiltration step and/or the at least one diffusion dialysis step is performed more often or less often to ensure that silicon or silicon compounds remain dissolved in the pickling solution while performing the pickling process.

According to the present invention, it is thereby advantageously possible to configure the regeneration treatment in such a way that a buildup of precipitated silicon compounds can be avoided even though different kinds of steel (especially comprising different (relative) amounts of silicon) are treated or processed.

According to another preferred embodiment of the present invention, the at least one microfiltration step and/or the at least one diffusion dialysis step is performed using different parameters regarding the microfiltration step and/or regarding the diffusion dialysis step, especially performing the at least one microfiltration step and/or the at least one diffusion dialysis step more often or less often and/or involving different membrane surface areas,
wherein by means of applying a first set of such parameters a first relative amount of silicon or silicon compounds is removed from the pickling solution, and wherein by means of applying a second set of such parameters a second relative amount of silicon or silicon compounds is removed from the pickling solution, wherein - in dependency of the treated silicon steel material, especially the respective steel grade - either the first set of parameters or the second set of parameters is applied, especially automatically applied.

According to the present invention, it is thereby advantageously possible to provide for a processing of the device for treating a pickling solution for a pickling process such that an economic operation of the pickling solution treatment is possible to be combined with an operation that avoids that silicon precipitates are building up as deposits on tube walls or the like of the pickling apparatus and/or the device for treating the pickling solution. Typically, an operation of the device for treating the pickling solution (e.g. using a first set of parameters regarding the microfiltration step and/or regarding the diffusion dialysis step, e.g. resulting in performing the at least one microfiltration step and/or the at least one diffusion dialysis step more often and/or involving a larger membrane surface area) such that a higher relative amount of silicon or silicon compounds is removed is less economical (compared to an operation of the device such that a lower relative amount of silicon or silicon compounds is/are removed, e.g. using a second set of parameters regarding the microfiltration step and/or regarding the diffusion dialysis step, e.g. resulting in performing the at least one microfiltration step and/or the at least one diffusion dialysis step less often and/or involving a smaller membrane surface area) due to, e.g., the required use of energy, membrane material and the like. However, an operation of the device for treating the pickling solution such that a lower relative amount of silicon or silicon compounds is removed also means that a higher amount of silicon or silicon compounds still is part of the regenerated pickling solution, resulting more silicon deposits being formed (or a higher likelihood of such deposits). Hence, according to the present invention, it is aimed at the right or optimized balance between an economical removal of silicon or silicon compounds on the one hand, and the avoidance, as much as possible, of the build-up of silicon deposits in the device for treating the pickling solution and/or in the corresponding pickling apparatus. According to the present invention, it is thus preferred to be able to operate the device for treating the pickling solution in a manner dependent on the silicon steel material treated by the pickling apparatus, especially using the first set of parameters in case of the treated silicon steel material having a higher amount of silicon, and using the second set of parameters in case of the treated silicon steel material having a lower amount of silicon.

The object of the present invention is further achieved by a device for treating a pickling solution for a pickling process, wherein the pickling solution comprises silicon or silicon compounds dispersed in the pickling solution or dissolved in the pickling solution, wherein the pickling solution comprises an inorganic acid compound and wherein the pickling process involves circulating the pickling solution in at least one pickling tank, wherein a part of the circulated pickling solution is removed from the circulation and wherein fresh or regenerated pickling solution is added to the circulated pickling solution,
wherein the device for treating the pickling solution is configured such that:
   -- the removed part of the pickling solution is provided to a storage cavity,
   -- at least part of the pickling solution is subjected to a regeneration treatment in order to obtain regenerated pickling solution, wherein the regeneration treatment involves or comprises
      -- at least one microfiltration step performed by at least one microfiltration module as part of the device for treating the pickling solution and/or
      -- at least one diffusion dialysis step performed by at least one diffusion dialysis module as part of the device for treating the pickling solution
such that dissolved silicon compounds and/or precipitates formed by the silicon compounds are removed, at least partly, from the regenerated pickling solution.

According to the present invention, it is thereby advantageously possible to increase the lifetime of the pickling apparatus and reduce maintenance costs. Thereby the lifetime of the pickling apparatus is further increased and the maintenance costs further reduced. Additionally the costs of production for high strength and/or high-grade steel, in particular for the automotive industry, are kept relatively low.

According to a further preferred embodiment of the present invention, the device comprises both at least one microfiltration module and at least one diffusion dialysis module, wherein especially the at least one diffusion dialysis module comprises an anion exchange membrane such that the pickling solution is able to be regenerated by being fed, especially slowly fed, on one side of the anion exchange membrane while deionized water being fed on the other side of the anion exchange membrane in opposite direction,
wherein especially the at least one diffusion dialysis module comprises the anion exchange membrane in a spirally arranged manner.

It is thereby advantageously possible according to the present invention to perform the regeneration treatment in an efficient manner.

According to a further preferred embodiment of the present invention, the device comprises a measuring module for measuring at least the silicon content or the content of silicon compounds in the regenerated pickling solution,
wherein the device is configured such that the regeneration treatment is performed in dependency of the measured silicon content or the measured content of silicon compounds, especially such that, in view of performing the pickling process of a predetermined kind of steel, the regenerated pickling solution comprises a predetermined amount or content of silicon or of silicon compounds before being added to the circulated pickling solution, especially such as to ensure that silicon or silicon compounds remain dissolved in the pickling solution while performing the pickling process.

According to the present invention, it is thereby advantageously possible to configure the regeneration treatment in such a way that a buildup of precipitated silicon compounds can be avoided even though different kinds of steel (especially comprising different (relative) amounts of silicon) are treated or processed.

The object of the present invention is further achieved by a pickling apparatus for pickling of a silicon steel material in a pickling solution, wherein the pickling apparatus comprises at least one pickling tank as well as a device for treating a pickling solution, especially according to one of claims 8 to 10,
wherein the pickling solution comprises silicon or silicon compounds dispersed in the pickling solution or dissolved in the pickling solution as a result from the pickling operation of the silicon steel material, wherein the pickling solution comprises an inorganic acid compound and wherein the pickling process involves circulating the pickling solution in the at least one pickling tank, wherein a part of the circulated pickling solution is removed from the circulation and wherein fresh or regenerated pickling solution is added to the circulated pickling solution, wherein the device for treating the pickling solution is configured such that:
   -- the removed part of the pickling solution is provided to a storage cavity or filtered to remove undissolved components from the pickling solution,
   -- at least part of the pickling solution is subjected to a regeneration treatment in order to obtain regenerated pickling solution, wherein the regeneration treatment involves or comprises
   -- at least one microfiltration step performed by at least one microfiltration module as part of the device for treating the pickling solution and/or
   -- at least one diffusion dialysis step performed by at least one diffusion dialysis module as part of the device for treating the pickling solution
such that dissolved silicon compounds and/or precipitates formed by the silicon compounds are removed, at least partly, from the treated pickling solution, wherein especially the silicon steel material is or corresponds to a silicon steel or a high strength steel or electric steel, especially a steel material comprising between 0,1 wt-% to 4,0 wt-% of silicon, especially between 0,2 and 0,35 wt-% of silicon or between 1,6 and 3,1 wt-% of silicon.

According to the present invention, it is thereby advantageously possible to increase the lifetime of the pickling apparatus and reduce maintenance costs. Preferably, the silicon compounds are contained in a hydrochloric acid and/or sulfuric acid bath used for pickling a silicon steel material, such as work pieces, sheets or steel strips.

Preferably, a modular system is provided by attaching the device to the pickling and/or regeneration equipments of already existing pickling apparatuses.

### BRIEF DESCRIPTION OF THE DRAWINGS

**Figure 1** illustrates schematically a pickling apparatus according to a first exemplary embodiment of the present invention.
**Figure 2** illustrates schematically a pickling apparatus according to a second exemplary embodiment of the present invention.
**Figure 3** illustrates schematically the microfiltration according to the present invention.
**Figure 4** illustrates schematically the diffusion dialysis according to the present invention.

### DETAILED DESCRIPTION

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described of illustrated herein.

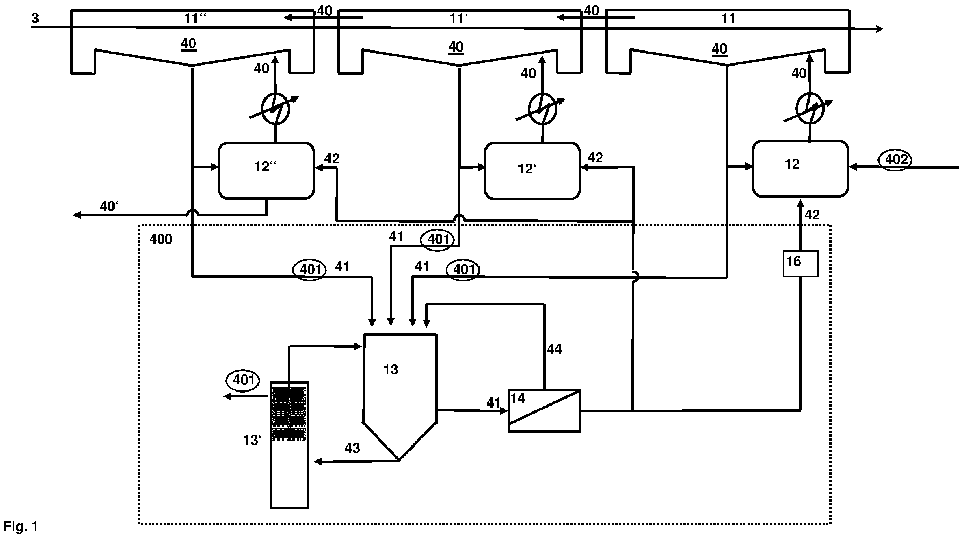

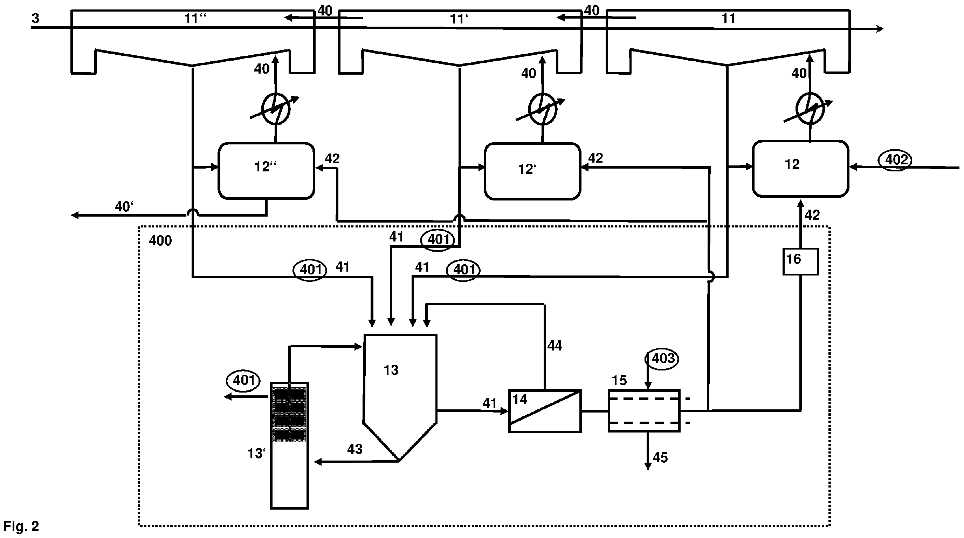

Figure 1 schematically shows a first exemplary embodiment of the pickling apparatus according to the present invention. Figure 2 schematically shows a second exemplary embodiment of the pickling apparatus according to the present invention. Both for the first and for the second exemplary embodiment of the present invention, the pickling apparatus 1 is configured to execute a pickling process, wherein silicon steel material 3 is pickled in a pickling solution 40. Preferably, the silicon steel material 3 is a steel strip, sheet or other work piece; both in Figures 1 and 2, the silicon steel material 3 is schematically represented as a steel strip, being moved or transported from the left hand side of the figures towards the right hand side of the figures. The pickling apparatus comprises one or more pickling tanks, also called a pickling bath device. In the exemplary embodiments shown in Figures 1 and 2, the pickling apparatus comprises a first pickling tank 11, a second pickling tank 11', and a third pickling tank 11". According to the present invention, the pickling solution 40, used for the pickling process, is treated (i.e. at least partially submitted to a treatment) such that the pickling solution 40 is able, at least partly, to be reused.

In order to achieve this, the pickling solution 40 is circulated in (or involving) the at least one pickling tank 11, 11', 11" in order to conduct the pickling process of the silicon steel material 3. Especially, as schematically represented in Figures 1 and 2, at least one recirculation tank is used, especially in a manner such that a different recirculation tank corresponds to or is used with each one of the pickling tanks. In the exemplary embodiment shown in Figures 1 and 2, a first recirculation tank 12 is used with the first pickling tank 11, a second recirculation tank 12' is used with the second pickling tank 11', and a third recirculation tank 12" is used with the third pickling tank 11", especially together with respective pumps or pumping means (that are represented in Figures 1 and 2 but not individually designated by a reference sign). Besides the circulation between the pickling tanks 11, 11', 11" and the respective (or corresponding) recirculation tanks 12, 12', 12", pickling solution 40 is especially also able to flow or to be transported from one of the pickling tanks 11, 11', 11" to another of the pickling tanks 11, 11', 11", especially from one of the pickling tanks 11, 11', 11" to the adjacent one of the pickling tanks 11, 11', 11", and especially according to a flow direction or transporting direction (i.e. from the (first) pickling tank 11 at the right hand side towards the (third) pickling tank 11" on the left hand side) opposite of the direction or movement of the silicon steel material 3, thereby achieving the silicon steel material 3 to be etched, at a first moment (i.e. on the left hand side of the figures), by means of an already relatively used pickling solution 40, and, at a later moment (i.e. on the right hand side of the figures), by means of relatively fresh or regenerated pickling solution 40.

According to the present invention, the pickling solution 40 comprises an inorganic acid compound 402. According to the exemplary embodiment shown in Figures 1 and 2, fresh such inorganic acid compound 402 is provided to the circulation associated with the first pickling tank 11, i.e. either to the first pickling tank 11 itself (not represented), or, as schematically shown in Figures 1 and 2, to the first recirculation tank 12. Relatively used pickling solution 40 is then transported to the second pickling tank 11', and, from there, to the third pickling tank 11", wherein the waste pickling solution 40' (or waste acid 40') is removed from the circulation associated with the third pickling tank 11", i.e. either from the third pickling tank 11" itself (not represented), or, as schematically shown in Figures 1 and 2, from the third recirculation tank 12".

According to the present invention, and especially while the pickling solution 40 is circulated in or involving the pickling tanks 11, 11', 11", a part of the circulated pickling solution 40 is removed from the circulation towards a storage cavity 13 which is also called sedimentation means 13 or sedimentation tank 13. The part of the pickling solution 40 which is removed from the circulation (associated with each of the respective pickling tanks 11, 11', 11") is designated by means of reference sign 41; hence, the removed part 41 (of the total circulated pickling solution 40) is directed to the storage cavity 13.

The pickling solution 40 comprises - as a consequence of the silicon steel material 3 having, or comprising, a comparatively high amount of silicon - a certain amount of silicon or silicon compounds 401. The silicon or silicon compounds 401 is/are dispersed in the pickling solution 40 or dissolved in the pickling solution 40 being circulated involving the pickling tank or pickling tanks 11, 11', 11".

According to the present invention, the removed part 41 of the circulated pickling solution 40 is treated or subjected to a regeneration treatment in order to obtain regenerated pickling solution 42. The regenerated (or fresh) pickling solution 42 is then fed back to the circulated pickling solution 40, especially it is added to the circulation, i.e. the regenerated pickling solution 42 is provided either only to the circulation associated with the first pickling tank 11 (i.e. either to the first pickling tank 11 itself (not represented), or, as schematically shown in Figures 1 and 2, to the first recirculation tank 12), or the regenerated pickling solution 42 is provided to all the circulations, i.e. associated with the first, second and third pickling tank 11, 11', 11" (in which case the regenerated pickling solution 42 is provided either to the respective first, second and third pickling tanks 11, 11', 11" themselves (not represented), or, as schematically shown in Figures 1 and 2, to the first, second, and third recirculation tanks 12, 12', 12").

According to the present invention, the regeneration of the pickling solution 40 (or, rather, the regeneration of the removed part 41 of the pickling solution 40) is performed by means of, in the first step, providing the removed part 41 of the pickling solution 40 to the storage cavity 13, and, in the second step, by means of subjecting at least part of the pickling solution 41 processed in the first step (i.e. the removed pickling solution 41) to the regeneration treatment in order to obtain the regenerated pickling solution 42, wherein the regeneration treatment involves or comprises a microfiltration or microfiltration step (or at least one microfiltration step) and/or a diffusion dialysis or diffusion dialysis step (or at least one diffusion dialysis step).

As a result, dissolved silicon compounds 45 and/or precipitates 43, 44 formed by the silicon compounds 401 are removed, at least partly, from the regenerated pickling solution 42, i.e. such silicon compounds 401 are removed, at least partly and by means of the regeneration treatment, from the removed part 41 of the pickling solution 40, and, hence, are not present any more (i.e. removed from) in the resulting regenerated pickling solution 42.

In order to conduct the regeneration, and, hence, the first and second step properly, the pickling apparatus (as shown in Figures 1 and 2) comprises a device 400 for treating the pickling solution for a pickling process. Besides the storage cavity 13, the device 400 for treating the pickling solution comprises chamber filter press 13'. Furthermore, the device 400 for treating the pickling solution comprises a microfiltration module 14 and/or a diffusion dialysis module 15, corresponding to the regeneration treatment comprising at least one microfiltration step and/or at least one diffusion dialysis step.

In Figure 1, the first embodiment of the pickling apparatus according to the present invention is shown, realizing a regeneration treatment with one microfiltration step (or with a plurality of microfiltration steps) but lacking a diffusion dialysis step; hence, the device 400 for treating the pickling solution exemplarily shown in Figure 1 only comprises the microfiltration module 14 (and no diffusion dialysis module 15). Especially, the microfiltration yields, besides a concentrate solution 44, a permeate solution, wherein the permeate solution corresponds, according to the (first) embodiment of Figure 1 (i.e. only comprising a (or at least one) microfiltration step and no diffusion dialysis step), to the regenerated pickling solution 42.

In contrast, Figure 2 shows the second embodiment of the pickling apparatus according to the present invention, realizing a regeneration treatment with one microfiltration step (or with a plurality of microfiltration steps) and additionally with one diffusion dialysis step (or with a plurality of diffusion dialysis steps); hence, the device 400 for treating the pickling solution exemplarily shown in Figure 2 comprises, besides the microfiltration module 14, also the diffusion dialysis module 15. Especially, the microfiltration yields, besides a concentrate solution 44, a permeate solution, wherein the permeate solution is fed, according to the (second) embodiment of Figure 2 (i.e. comprising both a (or at least one) microfiltration step and a (or at least one) diffusion dialysis step), to the diffusion dialysis module 15. Especially, the diffusion dialysis yields, besides a dialysate solution 45, a diffusate solution, wherein the diffusate solution corresponds to the regenerated pickling solution 42.

Hence, Figure 2 shows the regeneration treatment comprising both the at least one microfiltration step and the at least one diffusion dialysis step: at least part of the pickling solution 41 processed in the first step is subjected to the at least one microfiltration step, yielding, besides the concentrate solution 44, the permeate solution, wherein the permeate solution is subjected to the at least one (subsequent) diffusion dialysis step, yielding, besides the dialysate solution 45, the diffusate solution, wherein the diffusate solution corresponds to the regenerated pickling solution 42.

It is especially advantageous according to the (second) embodiment of Figure 2 that the raw acid (i.e. the permeate solution after the microfiltration step) is free of undissolved solids, because they might block the flow channels inside the diffusion dialysis module 15. Also the solution is ideally free of any total organic carbon, TOC, because organic components might poison the anion exchange membrane 15'.

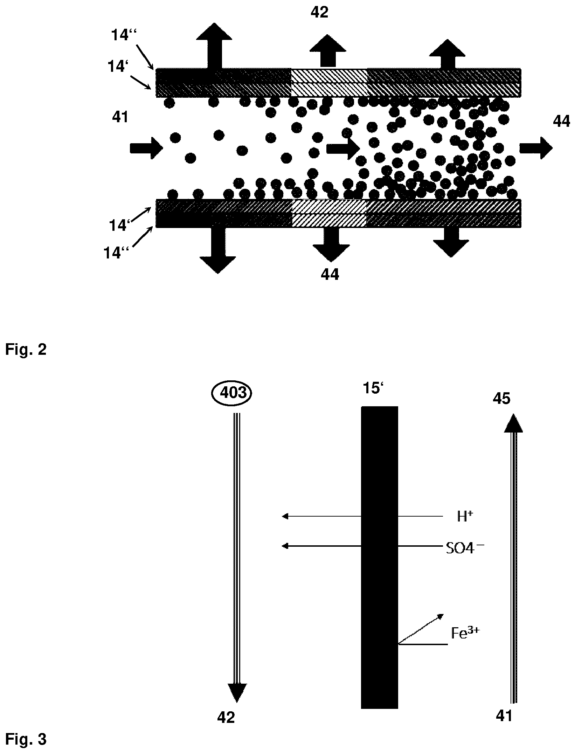

In Figure 3, the microfiltration according to the present invention and performed inside the microfiltration module 14 is schematically illustrated according to an exemplary embodiment: Preferably, the microfiltration step of the regeneration treatment especially involves a microfiltration membrane 14' being used, especially a tubular microfiltration membrane (a cross-section thereof being schematically shown in Figure 3), and especially made from polyethylene and/or having an inner tube diameter of between 2 mm and 20 mm, preferably between 4 mm and 8 mm. Especially, the microfiltration membrane 14' is stabilized by means of a support 14". The pickling solution 41 to be treated is fed through the microfiltration membrane tubes (in Figure 3 from the left hand side), resulting in a concentrate solution 44 (on the right hand side of Figure 3), and a permeate solution, wherein the permeate solution either corresponds to the regenerated pickling solution 42 (according to the embodiment of Figure 1), or is fed to the diffusion dialysis module 15 (according to the embodiment of Figure 2).

Furthermore preferably, the microfiltration, as realized by the microfiltration module 14 of the inventive device 400 for treating the pickling solution, is conducted by means of a by-pass microfiltration unit.

According to a further preferred embodiment of the present invention, the microfiltration is conducted by means of (or using) repeated flush-back operations, especially periodic flush-back operations, especially conducted by means of blasting air and/or an acid through the microfiltration membrane.

Especially, the microfiltration membrane 14' is made from a polyethylene (PE) material, such as, e.g., having 5,5 mm inner tube diameter, and a nominal pore size of 1,0 µm.

In Figure 4, the diffusion dialysis according to the present invention and performed inside the diffusion dialysis module 15 is schematically illustrated according to an exemplary embodiment: Preferably, the diffusion dialysis step of the regeneration treatment especially involves an anion exchange membrane 15' being used, wherein the pickling solution 41 to be regenerated is fed on one side of the anion exchange membrane 15' while deionized water 403 is fed on the other side of the anion exchange membrane 15' in opposite direction.

Furthermore, preferably, the diffusion dialysis is a concentration driven process such that the free acid of the pickling solution (e.g. H⁺ and/or SO₄⁻) is transported through the anion exchange membrane 15', leading to the diffusate solution, i.e. the regenerated pickling solution 42, and especially metals (e.g. iron metals such as Fe³⁺), preferably silicon, are rejected and remain in the dialysate solution 45. Typically, because of the osmotic conditions, also a water transport in the direction of the waste acid (i.e. in the direction of the dialysate solution 45) occurs.

Especially, the diffusion dialysis module 15 is provided such that the anion exchange membrane is spirally arranged.

According to the present invention, it is preferred that the pickling solution 40 is, or comprises, a strong acid, e.g. hydrochloric acid and/or sulfuric acid or a mixture of those. Hence, the pickling solution 40 comprises silicon compounds 401 and other metal compounds, e.g. iron compounds, dissolved in the pickling solution 40 (and, increasingly so, the relatively used pickling solution 40).

According to both the first and the second embodiment of the present invention, it is advantageously possible to adapt the regeneration treatment of the pickling solution 41 to its content, especially to its content of silicon or silicon compounds 401.

The device 400 for treating the pickling solution comprises a measuring module 16 for measuring at least the silicon content or the content of silicon compounds in the regenerated pickling solution 42. Especially, the device 400 for treating the pickling solution is configured such that the regeneration treatment is performed in dependency of the measured silicon content or the measured content of silicon compounds, especially such that, in view of performing the pickling process of a predetermined kind of steel, the regenerated pickling solution 42 comprises a predetermined amount or content of silicon or of silicon compounds before being added to the circulated pickling solution 40, especially such as to ensure that silicon or silicon compounds remain dissolved in the pickling solution 40 while performing the pickling process.

For example, the device 400 for treating the pickling solution is able to be operated such that, e.g., in case that a silicon steel material 3 is pickled that has a higher amount of silicon, it is to be expected that a higher amount of silicon or silicon compounds 401 will end in the circulated pickling solution 40; hence, in order to avoid silicon precipitates, the regenerated pickling solution 42 needs to have a lower content of silicon or silicon compounds 401 prior to being fed to the circulation. Likewise, e.g., in case that a silicon steel material 3 is pickled that has a lower amount of silicon, it is to be expected that a lower amount of silicon or silicon compounds 401 will end in the circulated pickling solution 40; hence, in order to avoid silicon precipitates, a higher content of silicon or silicon compounds 401 might be tolerated in the regenerated pickling solution 42 prior to being fed to the circulation.

Hence especially, the regeneration treatment comprises, especially as part of the second step, measuring of at least the silicon content or the content of silicon compounds 401 in the regenerated pickling solution 42, wherein the regeneration treatment is performed in dependency of the measured silicon content or the measured content of silicon compounds 401, especially such that, in view of performing the pickling process of a predetermined kind of steel, the regenerated pickling solution 42 comprises a predetermined amount or content of silicon or of silicon compounds before being added to the circulated pickling solution 40, especially such as to ensure that silicon or silicon compounds 401 remain dissolved in the pickling solution 40 while performing the pickling process.

Preferably according to the present invention, this is able to be realized by means of the at least one microfiltration step and/or the at least one diffusion dialysis step being performed more often or less often to ensure that silicon or silicon compounds 401 remain dissolved in the pickling solution 40 while performing the pickling process.

### REFERENCE SIGNS

- 3: silicon steel material
- 11, 11', 11": pickling tank
- 13: storage cavity
- 13': chamber filter press
- 14: microfiltration module
- 14': microfiltration membrane
- 14": support for microfiltration membrane
- 15: diffusion dialysis module
- 15': anion exchange membrane
- 16: measuring module
- 40: Pickling solution
- 40': waste pickling solution
- 41: pickling solution removed from circulation
- 42: regenerated pickling solution
- 43: silicon precipitates
- 44: silicon precipitates
- 45: dissolved silicon compounds
- 401: silicon compounds
- 402: inorganic acid compound
- 403: deionized water

## Claims

1. Method of treating a pickling solution (40) for a pickling process, wherein the pickling solution (40) comprises silicon or silicon compounds (401) dispersed in the pickling solution (40) or dissolved in the pickling solution (40), wherein the pickling solution (40) comprises an inorganic acid compound (402) and wherein the pickling solution (40), in order to conduct the pickling process, is circulated in at least one pickling tank (11, 11', 11"), wherein a part (41) of the circulated pickling solution (40) is removed from the circulation and wherein fresh or regenerated pickling solution (42) is added to the circulated pickling solution (40), wherein the method comprises the following steps:
-- in a first step, the removed part (41) of the pickling solution (40) is provided to a storage cavity (13),
-- in a second step, at least part of the pickling solution (41) processed in the first step is subjected to a regeneration treatment in order to obtain regenerated pickling solution (42), wherein the regeneration treatment involves or comprises
-- at least one microfiltration step and/or
-- at least one diffusion dialysis step
such that dissolved silicon compounds (45) and/or precipitates (43, 44) formed by the silicon compounds (401) are removed, at least partly, from the regenerated pickling solution (42).

2. Method according to claim 1, wherein the inorganic acid compound (402) comprises or consists of one or a plurality of the following:
-- hydrochloric acid,
-- sulfuric acid,
wherein especially the pickling process is performed for pickling of a silicon steel material (3), especially a silicon steel or a high strength steel or electric steel, especially a steel material (3) comprising between 0,1 wt-% to 4,0 wt-% of silicon, especially between 0,2 and 0,3 wt-% of silicon or between 1,6 and 3,1 wt-% of silicon.

3. Method according to one of the preceding claims, wherein the regeneration treatment comprises the at least one microfiltration step in a manner such that:
-- a microfiltration membrane is used, especially a tubular microfiltration membrane, and especially made from polyethylene and/or having an inner tube diameter of between 2 mm and 20 mm, preferably between 4 mm and 8 mm, and/or
-- the microfiltration is conducted by means of a by-pass microfiltration unit,
and/or
-- the microfiltration is conducted using or by means of repeated flush-back operations, especially periodic flush-back operations, especially conducted by means of blasting air and/or an acid through the microfiltration membrane, and/or
-- the microfiltration yields, besides a concentrate solution (44), a permeate solution, wherein the permeate solution corresponds to the regenerated pickling solution (42).

4. Method according to one of the preceding claims, wherein the regeneration treatment comprises the at least one diffusion dialysis step in a manner such that:
-- an anion exchange membrane is used, wherein the pickling solution (41) to be regenerated is fed on one side of the anion exchange membrane while deionized water (403) is fed on the other side of the anion exchange membrane in opposite direction, wherein especially the anion exchange membrane is spirally arranged, and/or
-- the diffusion dialysis is a concentration driven process such that the free acid of the pickling solution is transported through the anion exchange membrane, and especially metals, preferably silicon, are rejected and/or
-- the diffusion dialysis yields, besides a dialysate solution (45), a diffusate solution, wherein the diffusate solution corresponds to the regenerated pickling solution (42).

5. Method according to one of the preceding claims, wherein the regeneration treatment comprises both the at least one microfiltration step and the at least one diffusion dialysis step in a manner such that
-- at least part of the pickling solution (41) processed in the first step is subjected to the at least one microfiltration step yielding, besides a concentrate solution (44), a permeate solution,
-- wherein the permeate solution is subjected to the at least one diffusion dialysis step yielding, besides a dialysate solution (45), a diffusate solution, wherein the diffusate solution corresponds to the regenerated pickling solution (42).

6. Method according to one of the preceding claims, wherein the regeneration treatment results in a retention, from the regenerated pickling solution (42), of at least the following amounts of silicon as contained in the part of the pickling solution (41) subjected to the regeneration treatment:
-- at least 60%, preferably at least 80%, still preferably at least 90%, and even more preferably at least 95%, more preferably at least 99%,
especially
-- in case of using hydrochloric acid as inorganic acid compound, at least 60%, preferably at least 70%, still preferably at least 75%,
-- in case of using sulfuric acid as inorganic acid compound, at least 80%, preferably at least 90%, still preferably at least 95%, and even more preferably at least 99%.

7. Method according to one of the preceding claims, wherein the regeneration treatment comprises, especially as part of the second step, measuring of at least the silicon content or the content of silicon compounds (401) in the regenerated pickling solution (42),
wherein the regeneration treatment is performed in dependency of the measured silicon content or the measured content of silicon compounds (401), especially such that, in view of performing the pickling process of a predetermined kind of steel, the regenerated pickling solution (42) comprises a predetermined amount or content of silicon or of silicon compounds before being added to the circulated pickling solution (40), especially such as to ensure that silicon or silicon compounds (401) remain dissolved in the pickling solution (40) while performing the pickling process,
wherein especially the at least one microfiltration step and/or the at least one diffusion dialysis step is performed more often or less often to ensure that silicon or silicon compounds (401) remain dissolved in the pickling solution (40) while performing the pickling process.

8. Method according to one of the preceding claims, wherein the at least one microfiltration step and/or the at least one diffusion dialysis step is performed using different parameters regarding the microfiltration step and/or regarding the diffusion dialysis step, especially performing the at least one microfiltration step and/or the at least one diffusion dialysis step more often or less often and/or involving different membrane surface areas,
wherein by means of applying a first set of such parameters a first relative amount of silicon or silicon compounds (401) is removed from the pickling solution (40), and wherein by means of applying a second set of such parameters a second relative amount of silicon or silicon compounds (401) is removed from the pickling solution (40), wherein - in dependency of the treated silicon steel material (3), especially the respective steel grade - either the first set of parameters or the second set of parameters is applied, especially automatically applied.

9. Device (400) for treating a pickling solution (40) for a pickling process, wherein the pickling solution (40) comprises silicon or silicon compounds (401) dispersed in the pickling solution (40) or dissolved in the pickling solution (40), wherein the pickling solution (40) comprises an inorganic acid compound (402) and wherein the pickling process involves circulating the pickling solution (40) in at least one pickling tank(11, 11', 11"), wherein a part (41) of the circulated pickling solution (40) is removed from the circulation and wherein fresh or regenerated pickling solution (42) is added to the circulated pickling solution (40),
wherein the device (400) for treating the pickling solution is configured such that:
-- the removed part (41) of the pickling solution (40) is provided to a storage cavity (13),
-- at least part of the pickling solution (41) is subjected to a regeneration treatment in order to obtain regenerated pickling solution (42), wherein the regeneration treatment involves or comprises
-- at least one microfiltration step performed by at least one microfiltration module (14) as part of the device (400) for treating the pickling solution and/or
-- at least one diffusion dialysis step performed by at least one diffusion dialysis module (15) as part of the device (400) for treating the pickling solution such that dissolved silicon compounds (45) and/or precipitates (43, 44) formed by the silicon compounds (401) are removed, at least partly, from the regenerated pickling solution (42).

10. Device (400) according to claim 9, wherein the device (400) comprises both at least one microfiltration module (14) and at least one diffusion dialysis module (15), wherein especially the at least one diffusion dialysis module (15) comprises an anion exchange membrane such that the pickling solution is able to be regenerated by being fed on one side of the anion exchange membrane while deionized water (403) being fed on the other side of the anion exchange membrane in opposite direction,
wherein especially the at least one diffusion dialysis module (15) comprises the anion exchange membrane in a spirally arranged manner.

11. Device (400) according to claim 9 or 10, wherein the device (400) comprises a measuring module (16) for measuring at least the silicon content or the content of silicon compounds in the regenerated pickling solution (42),
wherein the device (400) is configured such that the regeneration treatment is performed in dependency of the measured silicon content or the measured content of silicon compounds, especially such that, in view of performing the pickling process of a predetermined kind of steel, the regenerated pickling solution comprises a predetermined amount or content of silicon or of silicon compounds before being added to the circulated pickling solution, especially such as to ensure that silicon or silicon compounds remain dissolved in the pickling solution while performing the pickling process.

12. Pickling apparatus (1) for pickling of a silicon steel material (3) in a pickling solution (40), wherein the pickling apparatus (1) comprises at least one pickling tank (11) as well as a device (400) for treating a pickling solution, especially according to one of claims 9 to 11,
wherein the pickling solution (40) comprises silicon or silicon compounds (41) dispersed in the pickling solution (40) or dissolved in the pickling solution as a result from the pickling operation of the silicon steel material, wherein the pickling solution comprises an inorganic acid compound and wherein the pickling process involves circulating the pickling solution in the at least one pickling tank, wherein a part of the circulated pickling solution is removed from the circulation and wherein fresh or regenerated pickling solution is added to the circulated pickling solution, wherein the device (400) for treating the pickling solution is configured such that:
-- the removed part of the pickling solution (40) is provided to a storage cavity or filtered to remove undissolved components from the pickling solution,
-- at least part of the pickling solution is subjected to a regeneration treatment in order to obtain regenerated pickling solution, wherein the regeneration treatment involves or comprises
-- at least one microfiltration step performed by at least one microfiltration module as part of the device (400) for treating the pickling solution and/or
-- at least one diffusion dialysis step performed by at least one diffusion dialysis module as part of the device (400) for treating the pickling solution such that dissolved silicon compounds and/or precipitates (42) formed by the silicon compounds are removed, at least partly, from the treated pickling solution, wherein especially the silicon steel material is or corresponds to a silicon steel or a high strength steel or electric steel, especially a steel material comprising between 0,1 wt-% to 4,0 wt-% of silicon, especially between 0,2 and 0,35 wt-% of silicon or between 1,6 and 3,1 wt-% of silicon.
